# EUROPEAN PATENT APPLICATION

(11) **EP 2 998 537 A1**
(43) Date of publication of application: **23.03.2016**
(21) Application number: 14185577.5
(22) Date of filing: 19.09.2014
(51) Int. Cl.: F02B 19/10, H01T 13/54

(54) **Pre-chamber of internal combustion engine**

(71) Applicant: Caterpillar Motoren GmbH & Co. KG, 24159 Kiel (DE)
(72) Inventor: Sixel, Eike Joachim, 24109 Kiel (DE); Holst, Hauke, 24161 Altenholz (DE)
(74) Representative: Kramer Barske Schmidtchen Patentanwälte PartG mbB

(57) **Abstract**

The present disclosure relates to a pre-chamber assembly (20) for an internal combustion engine, and a related method. The pre-chamber assembly (20) may comprise a main pre-chamber body (22) including a main pre-chamber (36), and an auxiliary pre-chamber body (32). The auxiliary pre-chamber body (32) may comprise an auxiliary pre-chamber (42) and at least one flow transfer passage (44) fluidly connecting the main pre-chamber (36) and the auxiliary pre-chamber (42). The auxiliary pre-chamber body (32) may further comprise a fuel supply channel (46) opening in the auxiliary pre-chamber (42). Thus, if combusting lean fuel air mixtures, the pre-chamber assembly (20) may facilitate a high ignitability while generating a small amount of nitrogen oxides only.

## Description

### Technical Field

The present disclosure generally relates to an internal combustion engine, and more particularly, to a pre-chamber assembly for an internal combustion engine, and a related method for operating the internal combustion engine.

### Background

A known problem of operating an internal combustion engine is the generation of harmful nitrogen oxides. Those nitrogen oxides may form during combustion as a result of high peak combustion temperatures. Accordingly, reducing the peak combustion temperatures during combustion may generally reduce the formation of nitrogen oxides. For this reason, lean air fuel mixtures such as lean gaseous fuel air mixtures are used. A lean air fuel mixture has a relatively large air-to-fuel ratio compared to a fuel mixture having stoichiometric air-to-fuel ratio.

Operating an internal combustion engine with a relatively large air to fuel ratio (lean mixture) may result in an incomplete combustion within the main combustion chamber due to the relatively slow rate of flame propagation from a single point ignition source, such as a spark plug. Furthermore, a poor ignitability may result from the lean mixture. Particularly, large-bore engines may suffer from those effects.

To improve the ignitability of lean burn gaseous fuel internal combustion engines, the same may be provided with pre-chambers (also referred to as pre-combustion chambers). For example, such a pre-chamber may be fluidly connected to a main combustion chamber of a respective cylinder via a riser passage and, typically, a plurality of flow transfer passages, but at least one. Those flow transfer passages allow flow of a lean mixture of gaseous fuel and air from the main combustion chamber into the pre-chamber during a compression stroke. Enrichment of the lean mixture in the pre-chamber is typically effected by providing a small quantity of gaseous fuel into the pre-chamber via a separate gas feed passage. The enriched mixture is ignited in the pre-chamber by an igniter such as a spark plug. Ignition of the enriched mixture causes a flame front of hot gases that propagates from the pre-chamber via the flow transfer passages into the main combustion chamber. Thus, the lean mixture in the main combustion chamber ignites and bums, and, thereby, expands against a movable piston that drives a crankshaft.

For example, US Patent 5,024,193 of Caterpillar Inc. discloses a fuel combustion system with a pre-combustion chamber assembly defining a pre-chamber. The pre-chamber has a pre-selected shape and volume. A plurality of ejection passages of pre-selected geometric cross-section is provided for directing and controllably expanding burning gases from the pre-chamber into a main combustion chamber at a velocity greater than speed of sound.

The present disclosure is directed, at least in part, to improving or overcoming one or more aspects of prior systems.

### Summary of the Disclosure

According to an aspect of the present disclosure, a pre-chamber assembly for an internal combustion engine is disclosed. The pre-chamber assembly may comprise a main pre-chamber body including a main pre-chamber. The pre-chamber assembly may further comprise an auxiliary pre-chamber body. The auxiliary pre-chamber body may include an auxiliary pre-chamber, and at least one flow transfer passage fluidly connecting the main pre-chamber and the auxiliary pre-chamber. The auxiliary pre-chamber body may further include a first fuel supply channel opening in the auxiliary pre-chamber.

According to another aspect of the present disclosure, a gaseous fuel internal combustion engine is disclosed. The gaseous fuel internal combustion engine may comprise at least one cylinder equipped with a pre-chamber assembly as exemplary disclosed herein.

According to another aspect of the present disclosure, a method for operating an internal combustion engine comprising a main combustion chamber is disclosed. The method may comprise supplying a lean mixture of fuel and air from the main combustion chamber into a main pre-chamber, and via the main pre-chamber to an auxiliary pre-chamber. The method may further comprise providing a fuel into the auxiliary pre-chamber, and thereby, enriching the mixture in the auxiliary pre-chamber by mixing the lean mixture from the main pre-chamber and the fuel. The method may further comprise igniting the enriched mixture in the auxiliary pre-chamber, and thereby, generating a flame propagating from the auxiliary pre-chamber into the main pre-chamber to ignite the mixture in the main pre-chamber.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of an upper section of an engine cylinder covered by a cylinder head only shown in part as well, the cylinder head comprising a pre-chamber assembly;
Fig. 2 is a schematic drawing of an embodiment of a pre-chamber assembly according to the present disclosure;
Fig. 3 is a schematic drawing of another embodiment of a pre-chamber assembly according to the present disclosure;
Fig. 4 is a schematic drawing of yet another embodiment of a pre-chamber assembly according to the present disclosure; and
Fig. 5 is a schematic drawing of another embodiment of a pre-chamber assembly according to the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that operating a pre-chamber with an enriched mixture of fuel and air may provide a very reliable operation of a lean burn gaseous fuel internal combustion engine. However, a considerable amount of nitrogen oxides may be generated in the enriched pre-chamber combusting the enriched mixture. Said effect may particularly be relevant in large bore engines including considerably large pre-chambers. Accordingly, it is proposed to separate the pre-chamber into two compartments fluidly connected to one another: a relatively large main pre-chamber and a relatively small auxiliary pre-chamber. The main pre-chamber may be filled with a lean mixture of fuel and air from the main combustion chamber during a compression stroke. The lean mixture may propagate from the main pre-chamber into the auxiliary pre-chamber. Further, fuel may be provided into the auxiliary pre-chamber to generate an enriched mixture therein by mixing the lean mixture from the main pre-chamber and the separately provided fuel. During operation of the engine, an ignition is caused in the auxiliary pre-chamber, for example, by a spark of a spark igniter. Flames generated in the auxiliary pre-chamber may propagate into the main pre-chamber to ignite the lean mixture therein. Then, the flames propagate further from the main pre-chamber into the main combustion chamber driven by an increased pressure through the combustion, for combusting the lean mixture therein.

Accordingly, a reliable ignition due to the presence of an enriched mixture of fuel and air is combined with a relatively low generation of nitrogen oxides in the pre-chamber as the same mainly contains a lean mixture of fuel and air, and only a minor amount of additional fuel in the auxiliary pre-chamber.

The present disclosure is further based in part on the realization that the above concept of enriching an auxiliary pre-chamber may be extended by also enriching the main pre-chamber. Particularly, the main pre-chamber may be enriched to a level below the auxiliary pre-chamber to improve combustion in the main pre-chamber, and thus, to increase the ignition energy for the subsequent combustion in the main combustion chamber filled with a lean mixture of fuel and air.

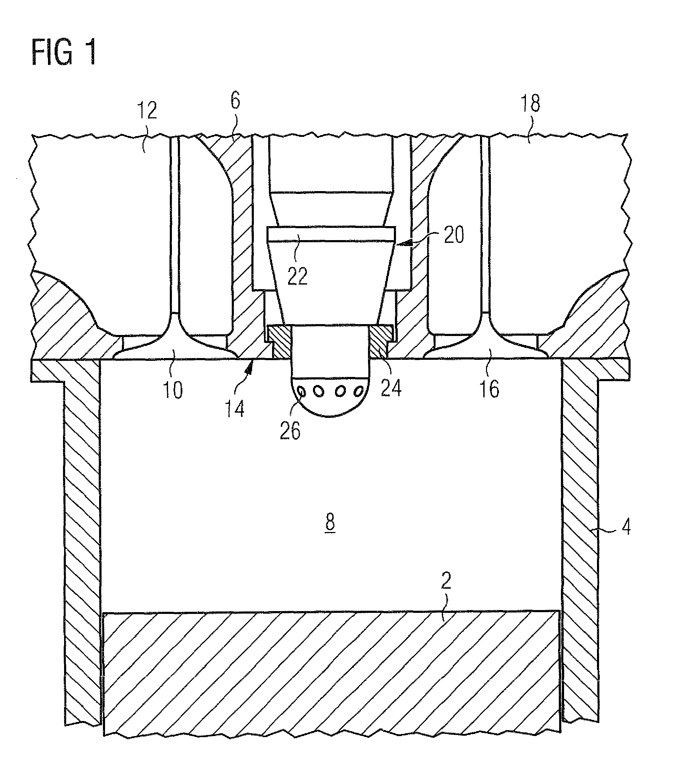

Referring now to the drawings to explain the general principle of the present disclosure by way of example. Fig. 1 depicts a piston 2 arranged in a cylinder 4 of an internal combustion engine (not shown in further detail). Cylinder 4 is covered by a cylinder head 6. Piston 2, cylinder 4, and cylinder head 6 together define a main combustion chamber 8 of the internal combustion engine.

Piston 2 is reciprocatingly arranged in cylinder 4 to move between a top dead center (TDC) and a bottom dead center (BDC) during operation of the internal combustion engine. For the purposes of the present disclosure, the internal combustion engine is considered as a four-stroke internal combustion engine operating at least partly on gaseous fuel such as a gas engine or a dual fuel engine. One skilled in the art will recognize, however, that the internal combustion engine may be any type of engine (turbine, gas, diesel, natural gas, propane, two-stroke, etc.) that would utilize the pre-chamber assembly as disclosed herein. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Cylinder head 6 includes at least one inlet valve 10, for example a poppet valve. Inlet valve 10 is accommodated in an inlet channel 12 opening in a piston sided face 14 of cylinder head 6 for supplying a lean mixture of gaseous fuel and air into main combustion chamber 8. Similarly, at least one outlet valve 16, for example also a poppet valve, is accommodated in an outlet channel 18 of cylinder head 6 to guide exhaust gas out of main combustion chamber 8.

Cylinder head 6 further comprises a pre-chamber assembly 20 including a main pre-chamber body 22 as is described in greater detail later on. A plurality of flow transfer passages 26 fluidly connects a pre-chamber (not visible in Fig. 1) within pre-chamber assembly 20 and main combustion chamber 8 of cylinder 4.

Pre-chamber assembly 20 is installed in cylinder head 6 via a mounting body 24 as shown in Fig. 1. Alternatively, pre-chamber assembly 20 may be installed in cylinder head 6 in any other fashion.

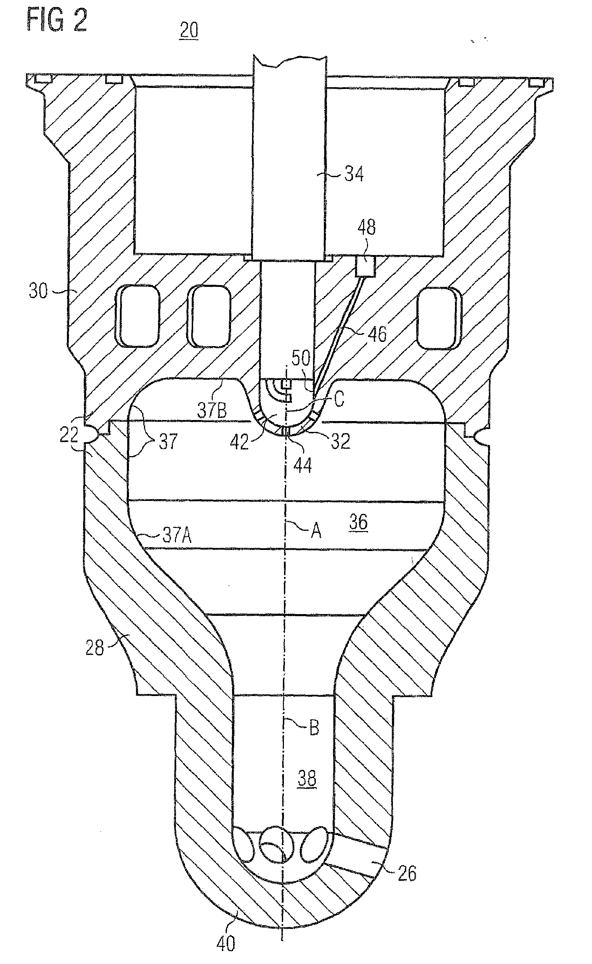

Referring to Fig. 2, an exemplary embodiment of a pre-chamber assembly is shown in a schematic sectional view.

Pre-chamber assembly 20 includes main pre-chamber body 22, which is formed of a first or lower body part (pre-chamber top) 28 and a second or upper body part (pre-chamber support) 30. Furthermore, pre-chamber assembly 20 includes an auxiliary pre-chamber body 32 and an ignition device 34.

Main pre-chamber body 22 includes and defines a main pre-chamber 36, a riser passage 38 and flow transfer passages 26. Specifically, main pre-chamber 36 is defined by an inner pre-chamber face 37 having a first section 37A being part of lower pre-chamber part 28, and a second section 37B being part of upper pre-chamber part 30.

Main pre-chamber 36 extends along a main pre-chamber axis A, is funnel-shaped and tapers in direction to cylindrically shaped riser passage 38. Alternatively, main pre-chamber 36 may have any other shape such as a cylindrical shape, pyramidal shape, conical shape, and combinations thereof. For example, main pre-chamber 36 may have a volume within a range between 0.1 % and 10 % of a compression volume of cylinder 4 (see Fig. 1).

A bottom section of main pre-chamber 36 smoothly transitions into riser passage 38. Said riser passage 38 longitudinally extends in main pre-chamber body 22, and opens in main pre-chamber 36. In the shown configuration of Fig. 2, a riser passage axis B of riser passage 38 is aligned with main pre-chamber axis A. Alternatively, riser passage axis B may run parallel to main pre-chamber axis A, or may confine an angle with pre-chamber axis A.

To fluidly connect a bottom section of riser passage 38 and a top section of main combustion chamber 8 (see Fig. 1), first flow transfer passages 26 are provided. First flow transfer passages 26 extend through a tip 40 of main pre-chamber body 22 along respective flow passage axes, which may run inclined to pre-chamber axis A, for example, within a range from 0° to 100°. Further, first flow transfer passages 26 transition into riser passage 38 and an outer face of tip 40, respectively, in a step-like fashion. Alternatively, first flow transfer passages 26 may include rounding and/or chamfers at their respective inlets and outlets.

In some embodiments, flow transfer passages 26 may directly open in main pre-chamber 36. In other words, a riser passage between a main pre-chamber and flow transfer passages may be omitted.

Tip 40 may be dome-shape, or may be flattened or otherwise curved. In some embodiments, tip 40 may reach into main combustion chamber 8, or may be arranged in a cavity provided in face 14 of cylinder head 6 (see Fig. 1).

Auxiliary pre-chamber body 32 includes and defines an auxiliary pre-chamber 42 and a plurality of second flow transfer passages 44, which fluidly connect auxiliary pre-chamber 42 and main pre-chamber 36. For example, second flow transfer passages 44 may have a diameter between 0.5 mm to 10 mm. Other embodiments may include any number of second flow transfer passages with any suitable diameter value.

In the shown embodiment, auxiliary pre-chamber 42 includes an upper cylindrical section and a lower dome-shaped section. Alternatively or additionally, auxiliary pre-chamber 42 may have any other shape, including, but not limited to, pyramidal, conical and/or spherical shapes.

In the shown embodiment, auxiliary pre-chamber body 32 is integrally formed with upper part 30 of main pre-chamber body 22. Alternatively, auxiliary pre-chamber body 32 may be mounted to main pre-chamber body 22, or may be integrally formed with lower part 28 of main pre-chamber body 22.

Further, auxiliary pre-chamber 42 and auxiliary pre-chamber body 32 are centrally disposed in main pre-chamber 36 such that an auxiliary pre-chamber axis C of auxiliary pre-chamber 42 is aligned with main pre-chamber axis A. Alternatively, for example, auxiliary pre-chamber 42 and auxiliary pre-chamber body 32 may be disposed off-centered in main pre-chamber 36.

Auxiliary pre-chamber body 32 is fully disposed in main pre-chamber body 36 in the shown embodiment. Alternatively, auxiliary pre-chamber body 32 may reach into main pre-chamber 36 in part only.

For example, a length of auxiliary pre-chamber 42 along auxiliary pre-chamber axis C may be within a range between 1 % and 50 %, particularly between 5 % and 15 %, of a length of main pre-chamber 36 along main pre-chamber axis A. A width of auxiliary pre-chamber 42 in a direction perpendicular to auxiliary pre-chamber axis C may be within a range from 1 % to 80 %, particularly between 10 % and 20 %, of a width of main pre-chamber 36 in a direction perpendicular to main pre-chamber axis A.

As a further alternative, auxiliary pre-chamber body 32 may be disposed outside of main pre-chamber 36 while still being fluidly connected to main pre-chamber 36 via second flow transfer passage(s) 44.

Second flow transfer passages 44 of auxiliary pre-chamber body 32 transition step-like into main pre-chamber 36 and auxiliary pre-chamber 42, respectively. Alternatively, for example, second flow transfer passages 44 may include chamfers, rounding, or funnel-shaped sections at transitions to main pre-chamber 36 and/or auxiliary pre-chamber 42.

Auxiliary pre-chamber body 32 and auxiliary pre-chamber 42, and main pre-chamber body 22 and main pre-chamber 36, respectively, are dimensioned such that the auxiliary pre-chamber volume is substantially smaller than the main pre-chamber volume. For example, a ratio between the auxiliary pre-chamber volume and the main pre-chamber volume may be within a range between 1:200 and 1:2, particularly between 1:100 and 1:20.

An ignition device 34, for example a spark plug, a laser or plasma igniter, an ignition fuel injector, or a glow plug, is installed in pre-chamber assembly 20. Specifically, ignition device 34 is operably connected to auxiliary pre-chamber 42.

Operably connected as used herein means that ignition device 34 is - depending on its ignition mechanism - configured and arranged to ignite an ignitable mixture in auxiliary pre-chamber 42. For example, in case ignition device 34 is a spark plug, the same may extend into auxiliary pre-chamber 42. Specifically, electrodes of the spark plug may reach into auxiliary pre-chamber 42 such that a spark between those electrodes ignites a mixture in auxiliary pre-chamber 42. As another example, in case ignition device 34 is a laser igniter, the same may be separated from auxiliary pre-chamber 42 via a window that is configured to transmit a laser beam from said laser igniter into auxiliary pre-chamber 42.

Furthermore, a first fuel supply channel 46 opens in auxiliary pre-chamber 42 for supplying fuel, for example gaseous fuel, into auxiliary pre-chamber 42 to enrich a mixture therein. First fuel supply channel 46 extends through main pre-chamber body 22, particularly through upper main pre-chamber part 30, from an inlet port 48 to an outlet 50 opening in auxiliary pre-chamber 42. For example, a fuel supply line (not shown in Fig. 2) may be connected to inlet port 48. Additionally, a valve (not shown in Fig. 2) may be installed in or fluidly connected upstream of first fuel supply channel 46 to selectively allow or block a flow of fuel from a fuel supply, through first fuel supply channel 46, and into auxiliary pre-chamber 42.

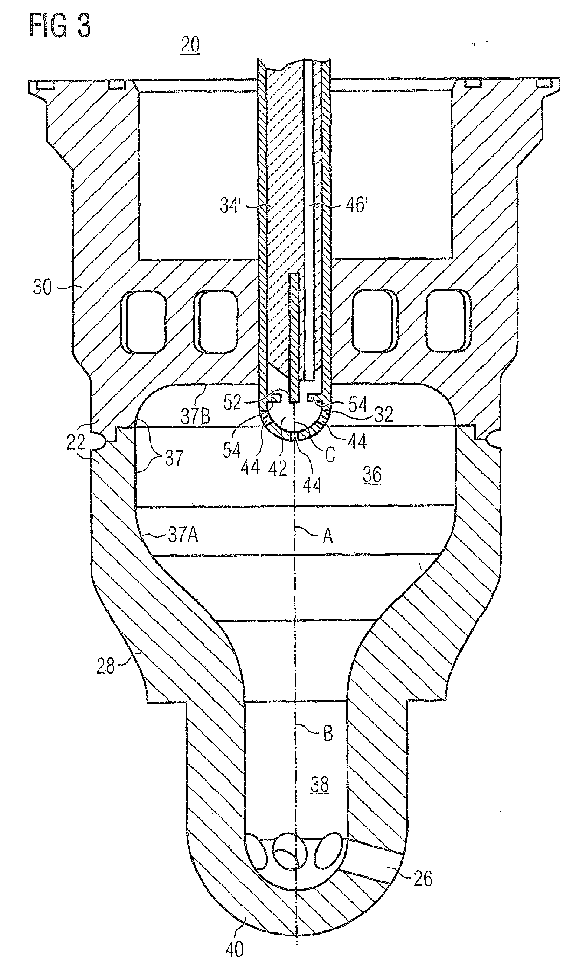

In some embodiments, ignition device 34 and first fuel supply channel 46 may be separately provided, for example as described herein with reference to the exemplary embodiment shown in Fig. 2. Alternatively, ignition device 34 and first fuel supply channel 46 may be provided as an integrated unit as described with reference to the exemplary embodiment shown in Fig. 3.

Referring to Fig. 3, another exemplary embodiment of a pre-chamber assembly is shown. The embodiment shown in Fig. 3 is similar to the one shown in Fig. 2, except the specific configuration of ignition device, fuel supply channel and auxiliary pre-chamber body. For the sake of comprehensiveness, similar and same features of the embodiments of Figs. 2 and 3 are referred to with the same reference signs.

In the shown embodiment of Fig. 3, ignition device 34' and auxiliary pre-chamber body 32' are integrated with one another to form a chamber plug. Particularly, auxiliary pre-chamber body 32 forms a dome-shaped tip of chamber plug 34' for shielding auxiliary pre-chamber 42 from main pre-chamber 36. Moreover, chamber plug 34' includes an inner first fuel supply channel 46' to supply fuel into auxiliary pre-chamber 42'.

As can be seen in Fig. 3, inner first fuel supply channel 46' is formed as a relatively thin channel. For example, inner first fuel supply channel 46' may be dimensioned to function as a flame arrestor (also called flashback arrestor in literature) to prevent flames generated in auxiliary pre-chamber 42 to pass inner first fuel supply channel 46'.

Further, chamber plug 34' includes a central electrode 52 and at least one outer electrode 54. Central electrode 52 is centrally disposed in auxiliary pre-chamber 42 and the at least one outer electrode 54 is disposed off-centered in auxiliary pre-chamber 42, for example, mounted to or integrally formed with auxiliary pre-chamber body 32.

As shown in Fig. 3, chamber plug 34' is installed in upper main pre-chamber part 30 of main pre-chamber body 22. Alternatively, chamber plug 34' may be installed in lower main pre-chamber part 28.

Again, a valve (not shown in Fig. 3), for example a solenoid valve, may be installed in or fluidly connected upstream of first fuel supply channel 46' to selectively allow or block a flow of fuel. Said valve may form part of chamber plug 34'.

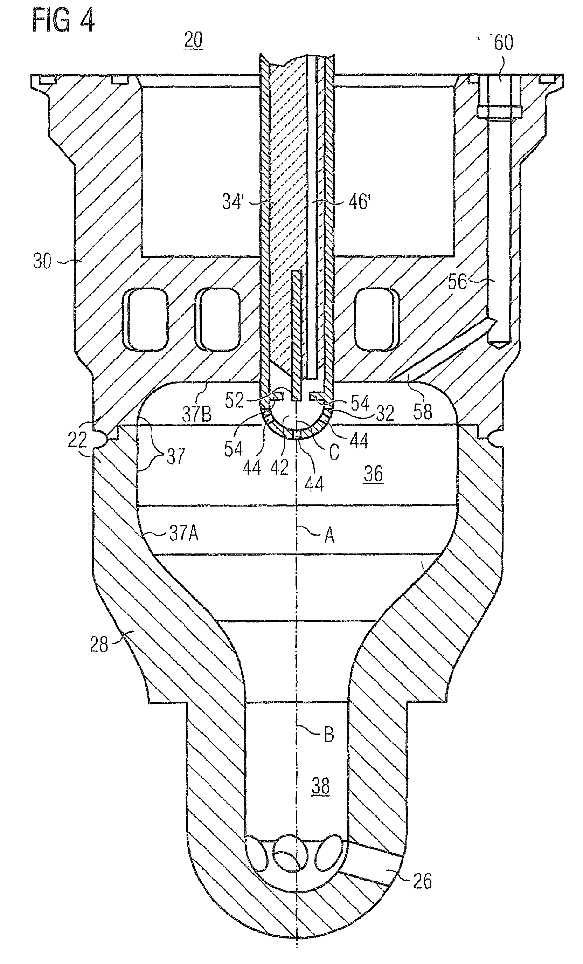

Referring to Fig. 4, an embodiment being particularly similar to the embodiment shown in Fig. 3 is depicted. However, the pre-chamber assembly of Fig. 4 includes an additional fuel supply channel.

Specifically, a second fuel supply channel 56 extends through upper body part 30 of pre-chamber body 22 between an inlet port 60 and an outlet 58. Outlet 58 is disposed in second face section 37B of inner pre-chamber face 37. Hence, second fuel supply channel 56 opens in main pre-chamber 36 for supplying a gaseous fuel for enriching main pre-chamber 36.

As one skilled in the art will appreciate, arrangement and configuration of second fuel supply channel 56 may be similar to a conventional pre-chamber assembly with a sole pre-chamber and a sole fuel supply channel opening in the pre-chamber for enriching the same with gaseous fuel. However, it is noted that according to the present disclosure, second fuel supply channel 56 is provided in combination with first fuel supply channel 46' that opens in auxiliary pre-chamber 42.

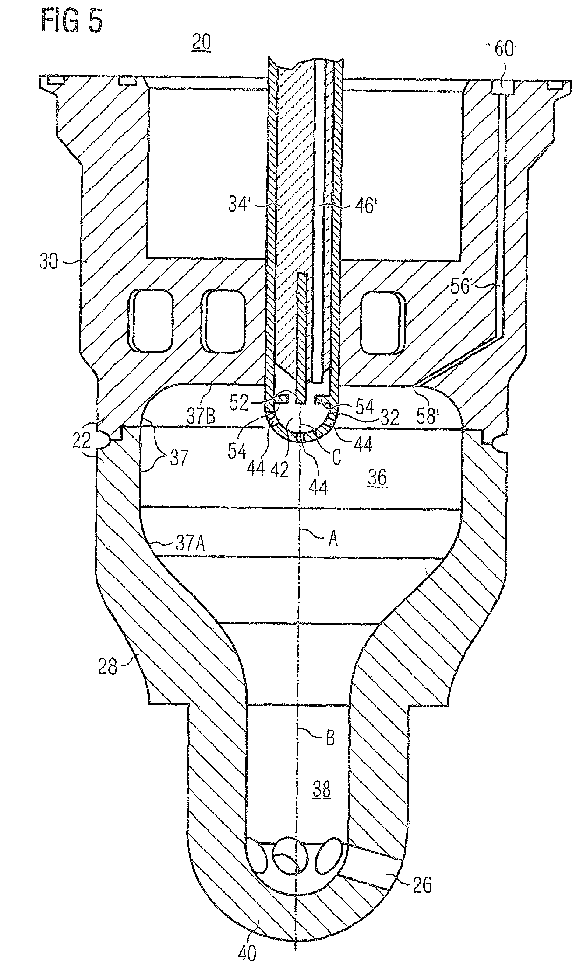

Lastly, referring to Fig. 5, another embodiment is shown that is similar to the one depicted in Fig. 4, but has a different configuration with respect to second fuel supply channel 56'.

Here, second fuel supply channel 56' is configured as a relatively thin channel similar to first fuel supply channel 46'. As a result, thin second fuel supply channel 56' has a relatively small flow cross sectional area relative to second fuel supply channel 56 shown in the embodiment shown in Fig. 4. For example, similar to inner first fuel supply channel 46' of the embodiment shown in Fig. 3, second fuel supply channel 56' may be dimensioned to function as a flame arrestor.

It is further noted that an additional fuel supply channel - similar to the ones shown in Figs. 4 and 5 - may be included in embodiments, in which auxiliary pre-chamber body 32 is integrally formed with main pre-chamber body 22, for example as shown in Fig. 2.

Similar to first fuel supply channel 46', a valve (not shown in Figs. 4 and), for example a check valve or a solenoid valve, may be installed in or fluidly connected upstream of second fuel supply channel 56, 56' to selectively allow or block a flow of fuel.

### Industrial Applicability

The pre-chamber assembly as generally disclosed herein is applicable in internal combustion engines. Particularly, the pre-chamber assembly is applicable in gaseous fuel internal combustion engines operating on a lean mixture of gaseous fuel and air for reducing the generation and emission of nitrogen oxides and/or improving ignition reliability.

In the following, operation of a gaseous fuel internal combustion engine including pre-chamber assembly 20 is exemplary described with reference to Figs. 1 to 3 to explain functionality of pre-chamber assembly 20 as disclosed herein.

During an intake stroke, inlet valve 10 in cylinder head 6 is opened to allow flow of a lean mixture of gaseous fuel and air from inlet channel 12 into main combustion chamber 8. The lean mixture may comprise a first gaseous fuel amount. Simultaneously, piston 2 travels from TDC to BDC of cylinder 4.

During a compression stroke, piston 2 travels back to TDC, and thereby, pushes a portion of the lean mixture of gaseous fuel and air from main combustion chamber 8 via first flow transfer passages 26 and riser passage 38 into main pre-chamber 36. Further, the lean mixture also flows from main pre-chamber 36 via second flow transfer passages 44 into auxiliary pre-chamber 42.

Further, for example during the exhaust stroke and/or the intake stroke, gaseous fuel is supplied into auxiliary pre-chamber 42 via separate first fuel supply channel 46. Thereby, an enriched mixture is generated in auxiliary pre-chamber 42 by mixing the lean mixture from main pre-chamber 36 (and main combustion chamber 8, respectively) and the separately provided fuel from first fuel supply channel 46.

For example, a ratio of a second gaseous fuel amount of gaseous fuel separately provided into auxiliary pre-chamber 42 and the first fuel amount may be within a range between 1:250 and 1:75, particularly between 1:200 and 1:100.

As a result of enriching auxiliary pre-chamber 42, the fuel air mixture in auxiliary pre-chamber 42 has a different air-to-fuel ratio (AFR) compared to the leaner mixtures in main pre-chamber 36 and main combustion chamber 8.

In the following, it is specifically referred to lambda (λ), which is defined as the air-to-fuel equivalence ratio. That is, lambda is a ratio of actual AFR to stoichiometry AFR for a given mixture. For example, λ= 1.0 is at stoichiometry, rich mixtures have a λ < 1.0, and lean mixtures have a λ > 1.0. It is note that as used herein, enriched mixture is not necessarily a rich mixture.

For example, the fuel air mixture in auxiliary pre-chamber may have a lambda within a range between 0.9 and 1.1, whereas the mixtures in main pre-chamber 36 and main combustion chamber 8 may have a lambda within a range between 1.2 and 2.8, particularly between 1.5 and 2.4.

Ignition device 34 then ignites the enriched mixture in auxiliary pre-chamber 42, for example by generating a spark between electrodes of a spark plug. Ignition causes a flame of hot gases propagating from auxiliary pre-chamber 42 via second flow transfer passages 44 into main pre-chamber 36. Subsequently, the lean mixture of gaseous fuel and air that is present in main pre-chamber 36 is ignited, and the flame of hot gases propagates further via riser passage 38 and first flow transfer passages 26 into main combustion chamber 8 to cause the main combustion therein. The ignition energy provided to main combustion chamber 8 is considerably high, because, inter alia, the pressure within auxiliary pre-chamber 42 and main pre-chamber 36 raises during combustion. The resulting pressure is higher than in main combustion chamber 8 such that the flame fronts enter main combustion chamber 8 at a high velocity.

As already outlined herein, in some embodiments, not only auxiliary pre-chamber 42, but also main pre-chamber 36 may be enriched. For example, a fuel may be provided to main pre-chamber 36 via second fuel supply channel 56 (see Figs. 4 and 5). However, additionally or alternatively, it is contemplated that enriching main pre-chamber 36 may be also achieved by providing so much fuel directly into auxiliary pre-chamber 42 via first fuel supply channel 46 (see Figs. 2 and 3) that the fuel also flows ("spills out") from auxiliary pre-chamber 42 into main pre-chamber 36 in a desired amount.

The optional enrichment of main pre-chamber 36 may lead to different lambdas in auxiliary pre-chamber 42, main pre-chamber 36 and main combustion chamber 8 with an increasing gradient from auxiliary pre-chamber 42 to main pre-chamber 36 to main combustion chamber 8. For example, the mixture in auxiliary pre-chamber 42 may have a lambda within a range between 0.8 and 1.2, the mixture in main pre-chamber 36 may have a lambda within a range between 1.2 and 1.7, and the mixture in main combustion chamber 8 may have a lambda within a range between 1.8 and 2.6.

As one skilled in the art will appreciate, (slightly) enriching also main pre-chamber 36 may allow to reliably combust leaner mixtures in main combustion chamber 8 relative to embodiments, in which auxiliary pre-chamber 42 is enriched only. The reason is that if enriching also main pre-chamber 36, the combustion therein increases, and thus, the ignition energy provided for the main combustion in main combustion chamber 8 is increased as well. In those embodiments, the higher generation of nitrogen oxides in slightly enriched main pre-chamber 36 may be more than overcompensated by the lesser generation of nitrogen oxides in main combustion chamber 8 being operable with considerable lean mixtures (cp. exemplary lambda values for both embodiments given above).

Generally, as outlined herein, the disclosed pre-chamber assembly configuration allows to reliably combust a lean mixture of gaseous fuel and air in the main combustion chamber while generating merely a small amount of nitrogen oxides in the pre-chamber. The generation of a small amount of nitrogen oxides is facilitated due to the presence of auxiliary pre-chamber 42, in which merely a considerably small amount of an enriched mixture is ignited relative to ignition in a conventional pre-chamber being entirely enriched.

Although the preferred embodiments of this invention have been described herein, improvements and modifications may be incorporated without departing from the scope of the following claims.

## Claims

1. A pre-chamber assembly (20) for an internal combustion engine, the pre-chamber assembly (20) comprising:
a main pre-chamber body (22) including a main pre-chamber (36); and
an auxiliary pre-chamber body (32) including:
an auxiliary pre-chamber (42);
at least one flow transfer passage (44) fluidly connecting the main pre-chamber (36) and the auxiliary pre-chamber (42); and
a first fuel supply channel (46) opening in the auxiliary pre-chamber (42).

2. The pre-chamber assembly (20) of claim 1, further comprising an ignition device (34) operably connected to the auxiliary pre-chamber (42) for igniting a mixture of fuel and air in the auxiliary pre-chamber (42).

3. The pre-chamber assembly (20) of claim 1 or 2, wherein the main pre-chamber body (22) further includes a second fuel supply channel (56) opening in the main pre-chamber (36).

4. The pre-chamber assembly (20) of any one of the preceding claims, wherein the auxiliary pre-chamber (42) is disposed at least in part in the main pre-chamber (36).

5. The pre-chamber assembly (20) of any one of the preceding claims, wherein the auxiliary pre-chamber (42) has an auxiliary pre-chamber volume and the main pre-chamber (36) has a main pre-chamber volume, and the auxiliary pre-chamber volume is smaller than the main pre-chamber volume.

6. The pre-chamber assembly (20) of claim 5, wherein the ratio between the auxiliary pre-chamber volume and the main pre-chamber volume is within a range between 1:200 and 1:2, particularly between 1:100 and 1:20.

7. The pre-chamber assembly (20) of any one of the preceding claims, wherein the auxiliary pre-chamber body (32) is disposed centrally or off-centered in the main pre-chamber (36).

8. The pre-chamber assembly (20) of any one of the preceding claims, further comprising:
a first valve connected to or integrated in the first fuel supply channel (46) for selectively allowing or blocking a fuel flow through the first fuel supply channel (46) into the auxiliary pre-chamber (42); and/or
a second valve connected to or integrated in a second fuel supply channel (56) for selectively allowing or blocking a fuel flow through the second fuel supply channel (56) into the main pre-chamber (36).

9. The pre-chamber assembly (20) of any one of the preceding claims, wherein:
the main pre-chamber body (22) and the auxiliary pre-chamber body (32) are integrally formed with or mounted to one another; and/or
the auxiliary pre-chamber body (32) and the ignition device (34) are formed as integrated unit (34').

10. The pre-chamber assembly (20) of any one of claims 2 to 9, wherein the ignition device (34) is configured as a spark plug (34), and the auxiliary pre-chamber body (32) and the spark plug (34) are formed as a chamber plug including the first fuel supply channel (46').

11. A gaseous fuel internal combustion engine comprising at least one cylinder (4) equipped with a pre-chamber assembly (20) according to any one of the preceding claims.

12. A method for operating an internal combustion engine comprising a main combustion chamber (8), the method comprising:
supplying a lean mixture of fuel and air from the main combustion chamber (8) into a main pre-chamber (36), and via the main pre-chamber (36) to an auxiliary pre-chamber (42);
providing a fuel into the auxiliary pre-chamber (42), and thereby, enriching the mixture in the auxiliary pre-chamber (42) by mixing the lean mixture from the main pre-chamber (36) and the fuel;
igniting the enriched mixture in the auxiliary pre-chamber (42), and thereby, generating a flame propagating from the auxiliary pre-chamber (42) into the main pre-chamber (36) to ignite the mixture in the main pre-chamber (36).

13. The method of claim 12, further comprising:
providing a fuel into the main pre-chamber (36), and thereby, enriching the mixture in the main pre-chamber (36) by mixing the lean mixture from the main combustion chamber (8) and the fuel,
wherein the enriched mixture in the auxiliary pre-chamber (42) has a lower air-to-fuel ratio than the enriched mixture in the main pre-chamber (36), and the enriched mixture in the main pre-chamber (36) has a lower air-to-fuel ratio than the lean mixture in the main combustion chamber (8).

14. The method of claim 13, wherein lambda (λ) is the air-to-fuel equivalence ratio, and:
the enriched mixture in the auxiliary pre-chamber (42) has a lambda (λ) within a range between 0.8 and 1.2;
the enriched mixture in the main pre-chamber (36) has a lambda (λ) within a range between 1.2 and 1.7; and
the lean mixture in the main combustion chamber (8) has a lambda (λ) within a range between 1.8 and 2.6.

15. The method of any one of claims 12 to 14, wherein:
the step of providing a fuel into the auxiliary pre-chamber (42) comprises providing a gaseous fuel into the auxiliary pre-chamber (42); and/or
the step of supplying a lean mixture of fuel and air comprises providing a lean mixture of gaseous fuel and air.
